# EUROPEAN PATENT SPECIFICATION

(11) **EP 3 595 260 B1**
(45) Date of publication and mention of the grant of the patent: **27.09.2023**
(21) Application number: 19173730.3
(22) Date of filing: 15.05.2014
(51) Int. Cl.: H04L 9/40

(54) **LOCATION BASED NETWORK USAGE POLICIES**
STANDORTBASIERTE NETZWERKNUTZUNGSPOLITIK
POLITIQUES D'UTILISATION DE RÉSEAU BASÉES SUR L'EMPLACEMENT

(30) Priority: 16.05.2013 US 201313896215; 17.07.2013 US 201313944585
(43) Date of publication of application: 15.01.2020
(62) Divisional of application: 14739275.7
(73) Proprietor: IBOSS, Inc., San Diego, California 92121 (US)
(72) Inventor: MARTINI, Paul, Michael, San Diego, CA 92121 (US)
(74) Representative: Fish & Richardson P.C.

(56) References cited:
- US-A- 5 872 928
- US-A1- 2012 023 546
- US-B1- 6 466 932

## Description

### TECHNICAL FIELD

This specification relates to systems and techniques that facilitate applying access policies across different network services and products.

### BACKGROUND

Directory services for organizing network users into groups are often used in computer network environments. Some directory services include Active Directory, OpenDirectory, eDirectory, and OpenLDAP, among others. Each directory service serves a common purpose of organizing computer users on a network into user groups and organizational units (OUs) depending on a user's role in an organization. Users with the similar policies and organizational roles, such as employees, managers, network administrators, are typically placed into the same user group or OU within the directory service.

Typical items stored within the directory include identities of the users allowed to log into the network, and the computers that are registered within the organization. Each user record, for example, contains many details about the user including the user's computer login name, email address, phone number, user roles within the organization, and full name.

Some directory services are based on a common platform called Lightweight Directory Access Protocol (LDAP), which provides a common method for communication between directory service products developed by different vendors, such as Active Directory (a product by Microsoft Corporation) or eDirectory (a product by Novell, Inc.). Typically, either the internal core of a vendor's directory server implementation is LDAP, or the vendor provides an LDAP networking interface to allow a first directory server to access information contained within a second directory server developed by another vendor.

Due to the fact that directory services contain such detailed information about each user on the network, a directory service becomes a critical source of information to other network services and products on a network that rely on this information to provide network services. US 6,466,932 describes a system and a method for implementing group policies.

### SUMMARY

The invention is defined by the appended claims.

The subject matter described in this specification may be implemented in various implementations to realize one or more of the following potential advantages. In various implementations, a network applies different network usage policies to similar resource requests based on a network connection point of the requesting client device, and/or, in unclaimed implementations, based on a physical location of the requesting client device. Alternatively, or in addition, a network identifies resources responsive to a network resource request based on a network connection point of the requesting client device, and/or, in unclaimed implementations, based on a physical location of the requesting client device. As a result, different usage policies may be applied, and/or different resources may be made available to a user, depending on the user's physical location within an enterprise's facility or other environment.

Details of one or more implementations are set forth in the accompanying drawings and the description below. Other features, aspects, and potential advantages will become apparent from the description, the drawings, and the claims.

### BRIEF DESCRIPTION OF THE DRAWINGS

FIGS. 1A-B are an example of a network system configured to apply different network usage policies to resource requests depending on a physical location of a client device sending the requests. When the location is a physical location, it is outside of the scope of the claims.
FIG. 2 is a block diagram of an environment in which an access control server applies network usage policies for an organization network based on a physical location of a network device that requests access to a network resource. When the location is a physical location, it is outside of the scope of the claims.
FIG. 3 is a flow diagram of a process for regulating access to resources available on a network based on a physical location of a client device requesting access to the resources. When the location is a physical location, it is outside of the scope of the claims.
FIG. 4 is a flow diagram of a process for selecting a highest priority network policy group.
FIG. 5 is a block diagram of computing devices that may be used to implement the systems and methods described in this document.

Like reference numbers and designations in the various drawings indicate like elements.

### DETAILED DESCRIPTION

A network may apply a network usage policy for a client device that is requesting access to a network resource to determine whether or not the client device may access the requested resource and whether the requested type of access is allowed. The network may apply the same network usage policy to the client device without consideration of the physical location of the client device.

To allow network administrators to apply different usage policies to the same client device depending on the physical location of the client device, a network identifies a connection point to which the client device connects to determine a physical location associated with the client device, and apply different usage policies to network resource requests received from the client device depending on the physical location associated with the client device.

For example, an access control server on the network determines whether the client device is located in the user's office or in a conference room, based on the network connection point to which the client device connects, and apply a network usage policy to requests receives from the client device based on the determined location. In one example, the access control server may apply a more restrictive network usage policy when the client device is located in a conference room, in comparison to that applied when the client device is located in a user's office, to reduce the likelihood that the user will be distracted during a meeting. For example, when the client device is location in a conference room (and thus presumably attending a meeting), the access control server may prevent the client device from accessing resources such as social media websites, email, and the like based on the premise that the user should be paying attention to the meeting and not, for example, reading email or surfing social media websites during the meeting.

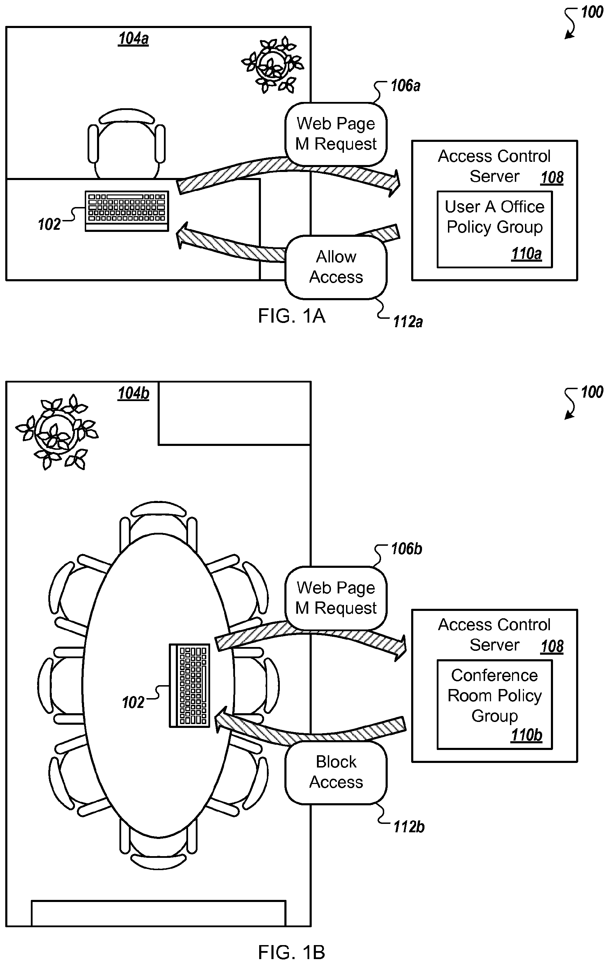

FIGS. 1A-B are an example of a network system 100 configured to apply different network usage policies to resource requests depending on a physical location of a client device 102 sending the requests. When the location is a physical location, it is outside of the scope of the claims. For example, when the client device 102 is physically located in a user's office 104a, as shown in FIG. 1A, the client device 102 may send a web page M request 106a to an access control server 108. For example, the access control server 108 identifies a user A office policy group 110a associated with the client device 102 and the location of the client device 102, here the user's office 104a, and determines whether to allow the client device 102 to access the requested web page M.

In this example, the policies included in the user A office policy group 110a indicate that the client device 102 may present the requested web page M to a user and the access control server 108 allows 112a the client device 102 to access to the requested web page M. The access control server 108 may allow the client device 102 to access the requested web page M by sending the client device 102 instructions to contact the requested web page M (e.g., when the access control server 108 is also a domain name server). The access control server 108 may use any appropriate algorithm to allow the client device 102 to access the requested web page M.

If, however, the client device 102 is physically located in a conference room 104b, as shown in FIG. 1B, and the client device 102 sends a web page M request 106b to the access control server 108, the access control server 108 identifies a conference room policy group 110b associated with the client device 102 and the physical location of the client device 102. The access control server 108 applies the network usage policies in the conference room policy group 110b to the web page M request 106b, determines that the client device 102 should not have access to the requested web page M, and blocks 112b the client device's 102 access to the requested web page M.

For example, the access control server 108 determines that the client device 102 is connected to a wireless network connection point that is physically located in the conference room 104b and that the client device 102 should not have access to the web page M to which the client device 102 has access when the client device is physically located in the user's office 104a. The access control server 108 may block access 112b to the requested web page M by not forwarding the web page M request 106b to a server hosting the web page M. The access control server 108 may use any appropriate algorithm to block the client device's 102 access to the requested web page M.

The network system 100 may apply a more restrictive conference room policy group 110b when the client device 102 is physically located in the conference room 104b, compared to when the client device 102 is physically located in the user's office 104a, to reduce the likelihood that a user of the client device 102 will be distracted during a meeting in the conference room 104b. Alternatively, the network system 100 may apply a less restrictive conference room policy group 110b when the client device 102 is physically located in the conference room 104b, compared to when the client device 102 is physically located in the user's office 104a, to allow the client device 102 access to additional resources that may be required by the user of the client device 102 during the meeting in the conference room 104b. For example, the client device 102 may retrieve a news article that is relevant to the meeting discussion that the client device 102 would not need to have access to and/or should not be allowed to access when physically located in the user's office 104a.

In some examples, the access control server 108 may send the client device 102 a message that indicates that the client device 102 may access the requested web page M. In some example, the access control server 108 may allow the client device 102 to access the requested web page M by not sending a spoofed response to the client device 102 based on the web page M request 106a.

In some unclaimed implementations, the access control server sends the client device 102 a message that indicates that the client device 102 may not access the requested web page M (e.g., as the block access message 112b). In certain unclaimed implementations, the access control server 108 sends a spoofed response to the client device 102 to prevent the client device 102 from presenting the web page M to a user.

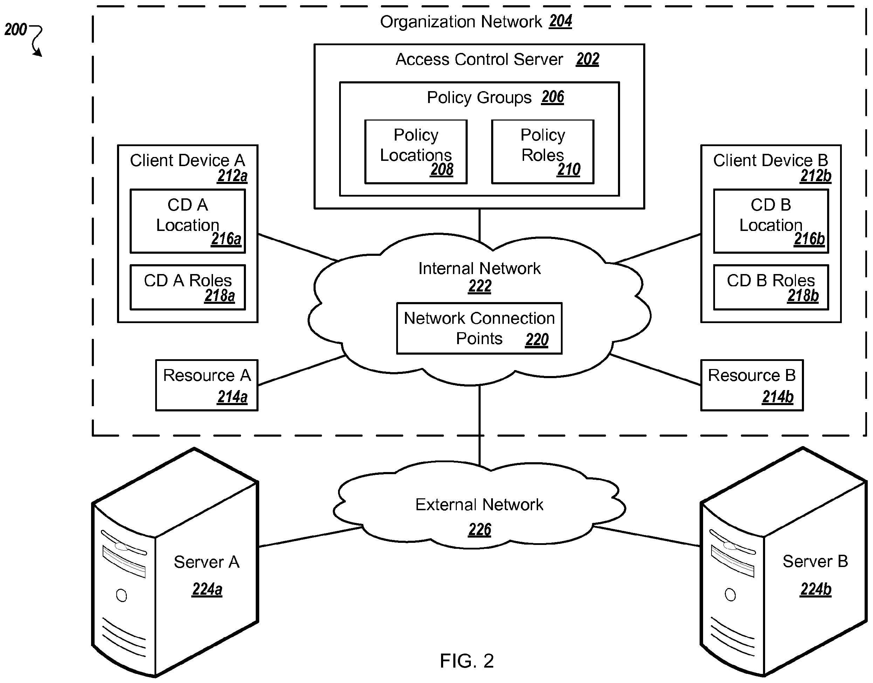

FIG. 2 is a block diagram of an environment 200 in which an access control server 202 applies network usage policies for an organization network 204 based on a physical location of a network device that requests access to a network resource. When the location is a physical location, it is outside of the scope of the claims. For example, the access control server 202 includes a plurality of network policy groups 206 that each include a policy location 208 and a policy role 210. When a client device A 212a requests access to a resource A 214a, the access control server 202 compares a client device A location 216a and one or more client device A roles 218a with the policy locations 208 and the policy roles 210, respectively, to identify one of the network policy groups 206 that is associated with the access request.

For example, the access control server 202 receives a request from the client device A 212a asking for access to the resource A 214a, such as a printer. The access control server 202 determines the physical location of the client device A 212a, for example, by identifying a network connection point 220 to which the client device A 212a currently connects for access to an internal network 222 of the organization network 204. The access control server 202 determines the client device A roles 218a associated with the client device A 212a. For example, the access control server 202 may receive the client device A roles 218a from the client device A 212. Alternatively, the access control server 202 may receive the client device A roles 218a from a directory service.

The access control server 202 compares the client device A location 216a and the client device A roles 218a with the policy locations 208 and the policy roles 210, respectively, to identify a particular policy group from the network policy groups 206 that is associated with the request received from the client device A 212a. For example, the access control server 202 identifies all of the policy groups that are associated with the client device A 212a and have a policy location 208 that matches the current client device A location 216a as a subset of policy groups from the network policy groups 206.

The access control server 202 selects the highest ranked policy group from the subset of policy groups and regulates the access of the client device A 212a to the resource A 214a based on the highest ranked policy group. For example, if the client device A 212a is associated with multiple user roles, such as a Managers role and a Marketing role, the access control server 202 determines which role has a higher priority and applies one or more network usage policies from the higher priority policy group to the request for access to the resource A 214a.

The organization network 204 includes a plurality of client devices 212a-b each of which are associated with a physical location and one or more user roles (e.g., based on the users operating the client devices). The client devices 212a-b may include personal computers, mobile communication devices, and other devices that can send and receive data over the internal network 222. The internal network 222, such as a local area network (LAN), wide area network (WAN), the Internet, or a combination thereof, connects the client devices 212a-b, the access control server 202, and the resources 214a-b.

In one example within the scope of the claims, when the client device A 212a is a laptop, the access control server 202 determines that the client device A 212a is physically located at a specific desk or in a specific office based on the network connection point 220, such as a network bridge, to which the client device A 212a is physically connected with an Ethernet cable. In another example within the scope of the claims, the access control server 202 determines that the client device A 212a is physically located in a conference room based on an IEEE 802.11 wireless network connection between the client device A 212a and the network connection point 220, such as a wireless router.

The policy locations includes specific locations, such as "Conference Room B," or general locations, such as "User's office." For example, when both the client device A 212a and the client device B 212b are associated with the location "Conference Room B" and belong to the "Marketing" user role, the access control server applies network usage policies from a Conference Room B - Marketing Policy Group to resource requests from either of the client devices.

Continuing the example, when the client device A 212a is associated with the user A's office and the access control server 202 receives a first resource request from the client device A 212a, the access control server 202 may apply a User Office - Marketing Policy Group to the first resource request. Further, when the client device B 212b is associated with the user B's office, which may or may not be a different physical office than the user A's office but is associated with the same type of work as the user A's office, and the access control server 202 receives a second resource request from the client device B 212b, the access control server 202 applies the same User Office - Marketing Policy Group to the second resource request as the policy group that was applied to the first resource request.

In another example, when the client device A 212a and the client device B 212b are associated with different user roles, the policy groups associated with the client devices 212a-b may be different even if both client devices are associated with the same physical location. For example, if the client device A 212a is associated with a Managers user role (i.e., as a highest ranked user role) and the client device B 212b is associated with a Marketing user role and both client devices 212a-b are associated with the Conference Room B, then the access control server 202 may identify different policies groups for the client devices 212a-b, such as a Conference Room - Managers Policy Group for the client device A 212a and a Conference Room - Marketing Policy Group.

In this example, the client devices 212a-b are associated with the same policy group regardless of the actual conference rooms that the client devices 212a-b are physically located in. For example, the access control server 202 associates the client device A 212a with the Conference Room - Managers Policy Group when the client device A 212a is associated with the Conference Room B or another conference room associated with the organization network 204.

In claimed implementations, the access control server 202 associates a client device with a different policy group when the client device is in a different room of the same type. For example, the access control server 202 may associate the client device A 212a with a Conference Room C - Managers Policy Group when the client device A 212a is located in the Conference Room C and the client device A 212a with a General Conference Room - Managers Policy Group when the client device A 212a is located in either the Conference Room A or the Conference Room B.

The access control server 202 may also regulate the access of the client devices 212a-b to external resources that are located outside of the organization network 204. For example, the access control server 202 may receive a request from the client device A 212a for access to one or more servers 224a-b that connect to the organization network 204 through an external network 226. After receiving a request for an external resource, the access control server 202 regulates the access of the client devices 212a-b to the external resources in a manner similar to the access regulation for the internal resources 214a-b.

In some implementations, the access control server 202 identifies a network policy group associated with one of the client devices 212a-b when the respective client device connects to the internal network 222. For example, when the client device A 212a connects to one of the network connection points 220, the access control server 202 may select one of the network policy groups 206 to apply to communications to and from the client device A 212a based on the client device A location 216a and the client device A roles 218a.

In some implementations, a device in the organization network 204 different from the access control server 202 regulates the access of the client devices 212a-b to one or more resources. For example, the resource A 214a may regulate the access of the client devices 212a-b to the resource A 214a.

In implementations where the client devices 212a-b do not send resource requests to the access control server 202, the access control server 202 may send the client devices 212a-b one or more block resource responses to prevent the client devices 212a-b from presenting requested content to a user. For example, the client device A 212a may send a resource request for a web page M to a network gateway that forwards the resource request to the access control server 202 and the server A 224a that hosts the web page M.

Continuing the example, the access control server 202 identifies a policy group for the client device A 212a and applies one or more network usage policies from the identified policy group to the resource request for the web page M. If the access control server 202 determines, based on the network usage policies, that the client device A 212a is allowed to access the web page M, the access control server 202 allows the client device A 212a to receive a response from the server A 224a and takes no further action. If, however, the access control server 202 determines that the web page M includes content that should not be presented to a user, the access control server 202 sends a block content response to the client device A 212a to prevent the client device A 212a from presenting the web page M to a user.

In some unclaimed implementations, the access control server 202 utilizes the physical locations of the client devices 212a-b to determine resources responsive to resource requests received from the client devices 212a-b. For example, the client device A 212a may send a request to the access control server 202 to print a document. The access control server 202 may use the client device A location 216a and the client device A roles 218a to identify a physical printer that is physically located close to the client device A location 216a and is accessible to the client device A 212a based on the client device A roles 218a, and prints the document on the identified physical printer. This allows the client device A 212a to print a document from multiple different physical locations associated with the organization network 204 where the access control server 202 automatically determines the printer that is closest to the client device A 212a without requiring a user to select a specific physical printer.

In some implementations, each of the network policy groups in the plurality of network policy groups 206 is linked to one of a plurality of user roles based on the human readable names associated with the network policy groups 206. For example, the organization network 204 links a specific network policy group with a specific user role when the name of the specific network policy group matches the name of the specific user role. In these implementations, the access control server 202 determines the network policy group associated with the client devices 212a-b based on the names of the client device roles 218a-b that match the names of the network policy groups 206.

In some examples, the user roles associated with the client devices 212a-b include a user group. In some examples, the user roles associated with the client devices 212a-b include an organizational unit.

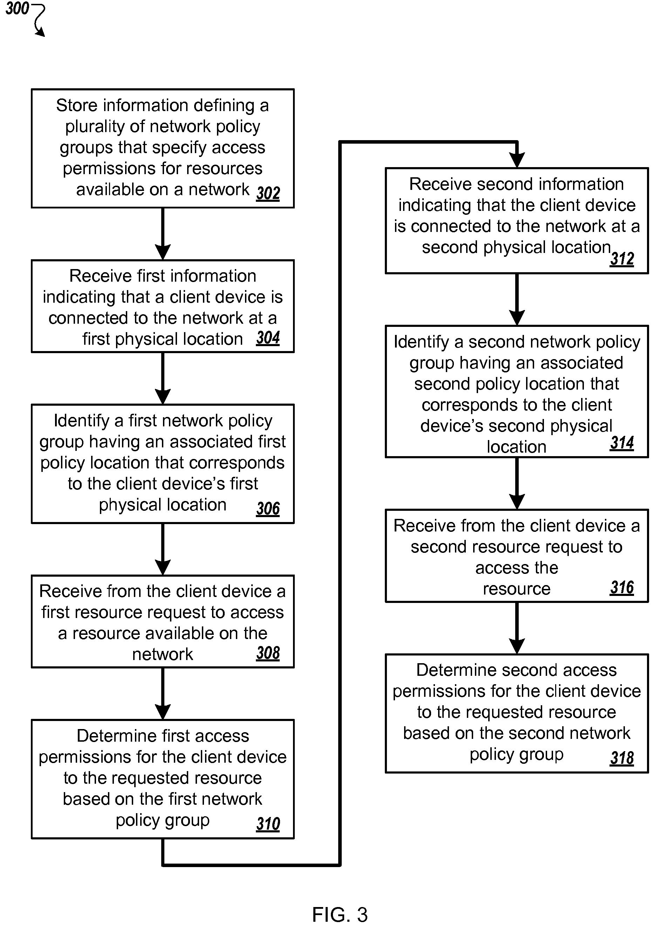

FIG. 3 is a flow diagram of a process 300 for regulating access to resources available on a network based on a physical location of a client device requesting access to the resources. When the location is a physical location, it is outside of the scope of the claims. The process 300 can be used by the access control server 202 from the environment 200.

The access control server stores information defining a plurality of network policy groups that specify access permissions for resources available on a network (302). Each network policy group has an associated policy location, an associated policy role, and one or more network usage policies that specify access permissions for resources available on a network. For example, the access control server stores the information in a database included on the access control server.

In an unclaimed implementation, the access control server can receive first information indicating that a client device is connected to the network at a first physical location (304). The first information identifies a first user role associated with the client device. For example, the access control server determines that the client device recently connected to the network and is located at the first physical location, such as an office of the user operating the client device, based on the network connection point that provides network access to the client device. The access control server may also determine that the client device belongs to a Marketing user role.

In an unclaimed implementation, the access control server identifies a first network policy group having an associated first policy location that corresponds to the client device's first physical location (306). The first network policy group also has an associated policy role that corresponds to the client device's first user role. For example, the access control server determines that the first network policy group has the same human readable location name as the first physical location, and the same human readable policy name as the user role name. In one example, the access control server identifies a User Office - Marketing Policy Group.

In some examples, the access control server receives, from the client device, a first resource request to access a resource available on the network (308). The access control server receives the first resource request while the client device is associated with the first physical location. For example, the access control server receives a request for a web page from the client device while the client device is physically located in the user's office.

In some examples, the access control server can host the requested resource. For example, the client device may request an intranet web page from the access control server. In one example, the access control server may be included in a printer and regulate the client device's access to the printer.

The access control server determines first access permissions for the client device to the requested resource based on the first network policy group (310). The access control server determines the first access permissions for the client device while the client device is associated with the first physical location. The first access permissions for the client device to the requested resource are based on the one or more network usage policies associated with the identified first network policy group.

For example, the access control server regulates the client device's access to resources available on the network based on the one or more network usage policies associated with the identified first network policy group. In one example, the access control server identifies a network usage policy from the User Office - Marketing Policy Group that is associated with the requested web page and applies access permissions from the identified network usage policy to the first resource request for the web page.

The access control server receives second information indicating that the client device is connected to the network at a second physical location (312). The second information identifies a second user role associated with the client device. The second physical location is different from the first physical location. For example, the access control server determines that the client device is currently physically located in a conference room and no longer located in the user's office.

In some implementations, the second user role is different than the first user role. For example, the access control server may determine that a Marketing user role applied to the client device while the client device was physically located in the user's office and that an "Everyone" user role applies to the client device while the client device is physically located in the conference room. Alternatively, the access control server may determine that the second user role is the same as the first user role.

The access control server identifies a second network policy group having an associated second policy location that corresponds to the client device's second physical location (314). The second network policy group has an associated policy role that corresponds to the client device's second user role. For example, the access control server identifies a Conference Room - Everyone Policy Group associated with the client device while the client device is physically located in the conference room.

The access control server receives, from the client device, a second resource request to access the resource (316). The access control server receives the second resource request while the client device is associated with the second physical location. For example, while the client device is physically located in the conference room, the access control server receives another request from the client device for access to the same web page the client device previously requested access to while the client device was physically located in the user's office.

The access control server determines second access permissions for the client device to the requested resource based on the second network policy group (318). The access control server determines the second access permissions for the client device while the client device is associated with the second physical location. The second access permissions for the client device to the requested resource are based on the one or more network usage policies associated with the identified second network policy group.

For example, the access control server regulates the client device's access to resources available on the network based on the one or more network usage policies associated with the Conference Room - Everyone Policy Group. The regulation of the client device's access to resource available on the network may be the same as or different from the regulation based on the User Office - Marketing Policy Group. For example, the second access permissions may allow the client device to access some resources that were not accessible to the client device based on the first access permissions and may prevent the client device from accessing other resources that were available to the client device based on the first access permissions.

In some implementations, the second network policy group is more restrictive than the first network policy group for at least some of the resources available on the network. For example, the access control server may allow the client device to access the requested web page in step 310 based on the first network policy group but prevent the client device from accessing the requested web page in step 318 based on the second network policy group.

In certain example, the first network policy group is more restrictive than the second network policy group for at least some of the resources available on the network. For example, the access control server may prevent the client device from accessing the requested web page in step 310 based on the first network policy group and allow the client device to access the requested web page in step 318 based on the second network policy group.

In some examples, the second network policy group is a default policy group that applies to all client devices that connect to the network at the second physical location. For example, the second network policy group applies to everyone in the organization network and all devices that connect to the internal network when those devices are associated with the second physical location. Alternatively, the second network policy group is associated with a subset of users and client devices included in the organization network.

The order of steps in the process 300 described above is illustrative only, and the regulating of access to the resources available on the network based on the physical location of the client device requesting access to the resources can be performed in different orders. For example, the access control server may receive the first request prior to identifying the first network policy group.

In some examples, the process 300 can include additional steps, fewer steps, or some of the steps can be divided into multiple steps. For example, the access control server may store information defining the plurality of network policy groups, receive the first information, identify the first network policy group, and regulate the client device's access to resources available on the network (i.e., perform steps 302-306, and 310) without performing one or more of the other steps in the process 300.

In some implementations, the first resource request includes the first information. For example, the access control server may receive the first resource request where the first resource request includes the first information indicating that the client device is connected to the first physical location.

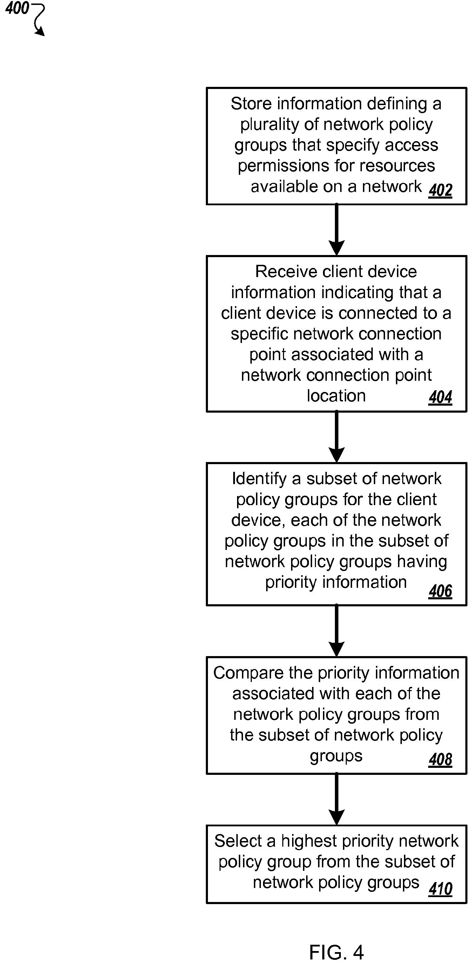

FIG. 4 is a flow diagram of a process 400 for selecting a highest priority network policy group. The process 400 can be used by the access control server 202 from the environment 200.

The access control server stores information defining a plurality of network policy groups that specify access permissions for resources available on a network (402). For example, the access control server stores the plurality of network policy groups as described above with reference to step 302.

The access control server receives client device information indicating that a client device is connected to a specific network connection point associated with a specific network connection point location (404). A plurality of network connection points provide access to the network and each network connection point is associated with a network connection point location where the specific network connection point is one of the plurality of network connection points. For example, the client device connects to a wireless modem and the wireless modem provides the client device information to the access control server, including information representing a physical location associated with the wireless modem.

In some implementations, the network connection point provides domain specific information associated with the client device to the access control server. For example, when the client device connects to a wireless router, the wireless router may append "@ConferenceRoomB" to a user role name associated with the client device when the wireless router is associated with Conference Room B.

Alternatively, the access control server may determine domain specific information for the client device based on the network connection point from which the access control server receives resource requests. For example, the access control server may include a list of domain information that associates requests from a network bridge with a first domain (e.g., "@office"), and requests from a wireless router with a second domain (e.g., "@ConferenceRoomB"). Based on the network connection point from which the access control server receives a request, the access control server appends the corresponding domain information to the user role name associated with the request.

The access control server identifies a subset of network policy groups for the client device, where each of the network policy groups in the subset of network policy groups has priority information (406). Each of the network policy groups in the subset of network policy groups is one of the network policy groups in the plurality of network policy groups, and the policy location for each of the network policy groups in the subset of network policy groups matches the network connection point location. For example, the policy locations for the network policy groups in the subset of network policy groups match the network connection point location (e.g., "@ConferenceRoomB").

In some implementations, the policy locations and the network connection point location both comprise the same location name. Alternatively, the access control server may use any other appropriate information to represent the policy locations and the network connection point location.

The access control server compares the priority information associated with each of the network policy groups from the subset of network policy groups (408). For example, the access control server determines which of the network policy groups from the subset of network policy groups is associated with a priority greater than the priorities of the other network policy groups in the subset of network policy groups. In one example, the access control server determines that a Marketing policy group is associated with the highest priority.

The access control server selects a highest priority network policy group from the subset of network policy groups (410). The highest priority network policy group has a higher priority than the other network policy groups in the subset of network policy groups based on the priority information associated with the highest priority network policy group. For example, the access control server regulates the client device's access to resources available on the network based on the one or more network usage policies included in the highest priority network policy group.

In one example, the access control server uses the user role name and the appended domain information to determine a network policy group for the client device. For example, when the client device belongs to a Marketing user role, the access control server selects a "Marketing@ConferenceRoomB" policy group and applies policies from the "Marketing@ConferenceRoomB" policy group to communications between the client device and servers hosting resources requested by the client device.

In some examples, the process 400 can include additional steps, fewer steps, or some of the steps can be divided into multiple steps. For example, the access control server may perform the process 400 or a portion of the process 400 in conjunction with the process 300. In these examples, the specific network connection point location associated with the specific network connection point identifies the first physical location.

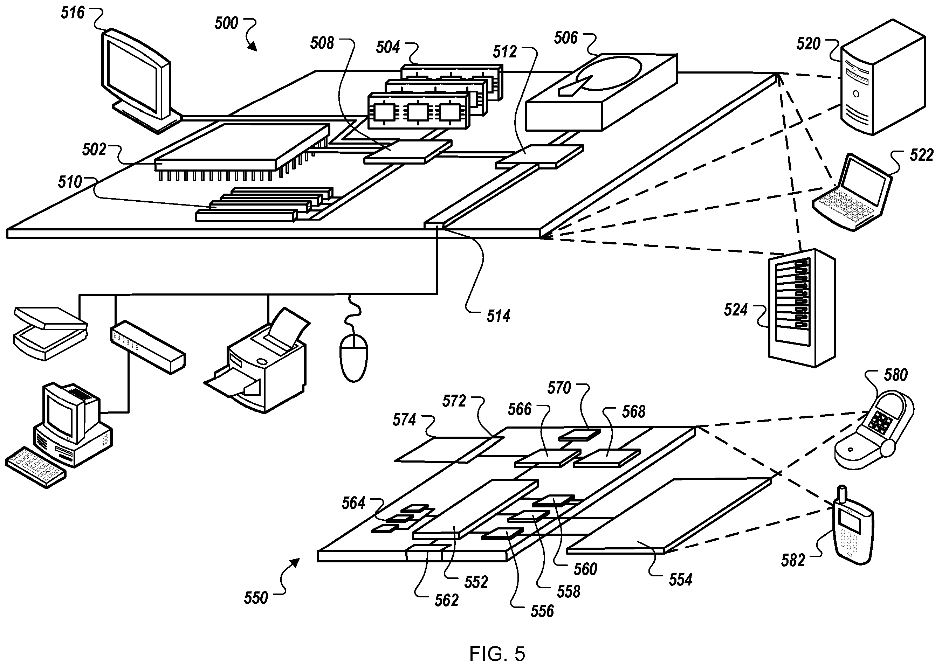

FIG. 5 is a block diagram of computing devices 500, 550 that may be used to implement the systems and methods described in this document, as either a client or as a server or plurality of servers. Computing device 500 is intended to represent various forms of digital computers, such as laptops, desktops, workstations, personal digital assistants, servers, blade servers, mainframes, and other appropriate computers. Computing device 550 is intended to represent various forms of mobile devices, such as personal digital assistants, cellular telephones, smartphones, and other similar computing devices. Additionally computing device 500 or 550 can include Universal Serial Bus (USB) flash drives. The USB flash drives may store operating systems and other applications. The USB flash drives can include input/output components, such as a wireless transmitter or USB connector that may be inserted into a USB port of another computing device. The components shown here, their connections and relationships, and their functions, are meant to be exemplary only, and are not meant to limit implementations of the inventions described and/or claimed in this document.

Computing device 500 includes a processor 502, memory 504, a storage device 506, a high speed interface 508 connecting to memory 504 and high speed expansion ports 510, and a low speed interface 512 connecting to low speed bus 514 and storage device 506. Each of the components 502, 504, 506, 508, 510, and 512, are interconnected using various busses, and may be mounted on a common motherboard or in other manners as appropriate. The processor 502 can process instructions for execution within the computing device 500, including instructions stored in the memory 504 or on the storage device 506 to display graphical information for a GUI on an external input/output device, such as display 516 coupled to high speed interface 508. In other implementations, multiple processors and/or multiple buses may be used, as appropriate, along with multiple memories and types of memory. Also, multiple computing devices 500 may be connected, with each device providing portions of the necessary operations (e.g., as a server bank, a group of blade servers, or a multi-processor system).

The memory 504 stores information within the computing device 500. In one implementation, the memory 504 is a volatile memory unit or units. In another implementation, the memory 504 is a non-volatile memory unit or units. The memory 504 may also be another form of computer-readable medium, such as a magnetic or optical disk.

The storage device 506 is capable of providing mass storage for the computing device 500. In one implementation, the storage device 506 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 504, the storage device 506, or memory on processor 502.

The high speed controller 508 manages bandwidth-intensive operations for the computing device 500, while the low speed controller 512 manages lower bandwidth-intensive operations. Such allocation of functions is exemplary only. In one implementation, the high speed controller 508 is coupled to memory 504, display 516 (e.g., through a graphics processor or accelerator), and to high speed expansion ports 510, which may accept various expansion cards (not shown). In the implementation, low speed controller 512 is coupled to storage device 506 and low speed expansion port 514. The low speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 500 may be implemented in a number of different forms, as shown in the figure. For example, it may be implemented as a standard server 520, or multiple times in a group of such servers. It may also be implemented as part of a rack server system 524. In addition, it may be implemented in a personal computer such as a laptop computer 522. Alternatively, components from computing device 500 may be combined with other components in a mobile device (not shown), such as device 550. Each of such devices may contain one or more of computing device 500, 550, and an entire system may be made up of multiple computing devices 500, 550 communicating with each other.

Computing device 550 includes a processor 552, memory 564, an input/output device such as a display 554, a communication interface 566, and a transceiver 568, among other components. The device 550 may also be provided with a storage device, such as a microdrive or other device, to provide additional storage. Each of the components 550, 552, 564, 554, 566, and 568, are interconnected using various buses, and several of the components may be mounted on a common motherboard or in other manners as appropriate.

The processor 552 can execute instructions within the computing device 550, including instructions stored in the memory 564. The processor may be implemented as a chipset of chips that include separate and multiple analog and digital processors. Additionally, the processor may be implemented using any of a number of architectures. For example, the processor 502 may be a CISC (Complex Instruction Set Computers) processor, a RISC (Reduced Instruction Set Computer) processor, or a MISC (Minimal Instruction Set Computer) processor. The processor may provide, for example, for coordination of the other components of the device 550, such as control of user interfaces, applications run by device 550, and wireless communication by device 550.

Processor 552 may communicate with a user through control interface 558 and display interface 556 coupled to a display 554. The display 554 may be, for example, a TFT (Thin-Film-Transistor Liquid Crystal Display) display or an OLED (Organic Light Emitting Diode) display, or other appropriate display technology. The display interface 556 may comprise appropriate circuitry for driving the display 554 to present graphical and other information to a user. The control interface 558 may receive commands from a user and convert them for submission to the processor 552. In addition, an external interface 562 may be provide in communication with processor 552, so as to enable near area communication of device 550 with other devices. External interface 562 may provide, for example, for wired communication in some implementations, or for wireless communication in other implementations, and multiple interfaces may also be used.

The memory 564 stores information within the computing device 550. The memory 564 can be implemented as one or more of a computer-readable medium or media, a volatile memory unit or units, or a non-volatile memory unit or units. Expansion memory 574 may also be provided and connected to device 550 through expansion interface 572, which may include, for example, a SIMM (Single In Line Memory Module) card interface. Such expansion memory 574 may provide extra storage space for device 550, or may also store applications or other information for device 550. Specifically, expansion memory 574 may include instructions to carry out or supplement the processes described above, and may include secure information also. Thus, for example, expansion memory 574 may be provide as a security module for device 550, and may be programmed with instructions that permit secure use of device 550. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 564, expansion memory 574, or memory on processor 552 that may be received, for example, over transceiver 568 or external interface 562.

Device 550 may communicate wirelessly through communication interface 566, which may include digital signal processing circuitry where necessary. Communication interface 566 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 568. In addition, short-range communication may occur, such as using a Bluetooth, WiFi, or other such transceiver (not shown). In addition, GPS (Global Positioning System) receiver module 570 may provide additional navigation- and location-related wireless data to device 550, which may be used as appropriate by applications running on device 550.

Device 550 may also communicate audibly using audio codec 560, which may receive spoken information from a user and convert it to usable digital information. Audio codec 560 may likewise generate audible sound for a user, such as through a speaker, e.g., in a handset of device 550. Such sound may include sound from voice telephone calls, may include recorded sound (e.g., voice messages, music files, etc.) and may also include sound generated by applications operating on device 550.

The computing device 550 may be implemented in a number of different forms, as shown in the figure. For example, it may be implemented as a cellular telephone 580. It may also be implemented as part of a smartphone 582, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), peer-to-peer networks (having ad-hoc or static members), grid computing infrastructures, and the Internet.

The computing system can include clients and servers. A client and server are generally remote from each other and typically interact through a communication network. The relationship of client and server arises by virtue of computer programs running on the respective computers and having a client-server relationship to each other.

## Claims

1. A method (400) performed by a computer system, the method comprising:
storing (402) information defining a plurality of network policy groups, wherein each network policy group includes a policy location (208), a policy role (210), and one or more network usage policies that specify access permissions for resources available on a network, wherein the policy location defines a specific type of a room in an office space;
receiving (404), from a first network connection point on the network, first client device information indicating that a client device is connected to the first network connection point, wherein the first network connection point is a device to which the client device connects to access the network, wherein a plurality of network connection points provide access to the network and each network connection point is associated with a network connection point location, the first network connection point being one of the plurality of network connection points that is associated with a first network connection point location, the received first client device information identifying a first user role associated with the client device;
based on identifying the first network connection point on which the client device is connected, determining a specific location associated with the client device, wherein the specific location corresponds to a type of a room in the office space where the client device operates;
identifying (306), from among the plurality of network policy groups and based on 1) the specific location determined based on the first network connection point and 2) the first user role associated with the client device, a first network policy group associated with both i) a first policy location that corresponds to the type of the room corresponding to the specific location determined as associated with the client device and ii) a policy role that corresponds to the first user role of the client device; and
regulating the client device's access to resources available on the network based on the one or more network usage policies associated with the identified first network policy group.

2. The method of claim 1, wherein the first network connection point is a wireless router.

3. The method of claim 1, wherein identifying the first network policy group comprises:
identifying (406) a subset of network policy groups for the client device, each of the network policy groups in the subset of network policy groups having priority information and being one of the network policy groups in the plurality of network policy groups, wherein the policy location for each of the network policy groups in the subset of network policy groups matches the first network connection point location;
comparing (408) the priority information associated with each of the network policy groups from the subset of network policy groups; and
selecting (410) a highest priority network policy group from the subset of network policy groups as the first network policy group, the highest priority network policy group having a higher priority than the other network policy groups in the subset of network policy groups based on the priority information associated with the highest priority network policy group.

4. The method of claim 1, further comprising:
receiving (308), from the client device while the client device is connected to the first network connection point associated with the first network connection point location, a first resource request to access a resource available on the network;
wherein regulating the client device's access to resources available on the network based on the one or more network usage policies associated with the identified first network policy group comprises determining (310), while the client device is connected to the first network connection point associated with the first network connection point location and based on receiving the first resource request, first access permissions for the client device to the requested resource based on the one or more network usage policies associated with the identified first network policy group.

5. The method of claim 4, wherein the first resource request comprises the first client device information.

6. The method of claim 4, further comprising:
receiving (312), from a second network connection point on the network, second client device information indicating that the client device is connected to the second network connection point, the second network connection point being one of the plurality of network connection points that is associated with a second network connection point location, the received second client device information identifying a second user role, the second network connection point location being different from the first network connection point location
identifying (314), from among the plurality of network policy groups, a second network policy group having both (i) an associated second policy location that corresponds to the second network connection point location, and (ii) an associated policy role that corresponds to the client device's second user role;
receiving (316), from the client device while the client device is connected to the second network connection point associated with the second network connection point location, a second resource request to access the resource; and
determining (318), while the client device is connected to the second network connection point associated with the second network connection point location and based on receiving the second resource request, second access permissions for the client device to the requested resource based on the one or more network usage policies associated with the identified second network policy group.

7. The method of claim 6, wherein the second network policy group is a default network policy group that applies to all client devices that connect to the network at the second network connection point associated with the second network connection point location.

8. The method of claim 6, wherein the second network policy group is more restrictive than the first network policy group for at least some of the resources available on the network.

9. The method of claim 1 or 6, wherein the received client device information comprises domain specific information for the network connection point to which the client device is connected.

10. The method of claim 1, wherein each of the network policy groups in the plurality of network policy groups is linked to one of a plurality of user roles based on a network policy group name associated with the linked network policy group matching a user role name associated with the linked user role, the first user role associated with the client device being one of the plurality of user roles.

11. The method of claim 1, wherein the first policy location and the first network connection point location both comprise the same network connection point location name.

12. The method of claim 1, wherein identifying the first network policy group and regulating the client device's access to resources available on the network are based on whether the network connection points are wireless connections or wired connections.

13. A computer storage medium encoded with instructions that, when executed by one or more computers, cause the one or more computers to perform operations comprising the method of any of claim 1 to 12.

14. A computer system including one or more computers configured to perform the operations of any one of the methods of claims 1 to 12, wherein the computers are configured to perform the operations by virtue of having software, firmware, hardware, or a combination thereof, installed on the computer system.

## Patentansprüche

1. Verfahren (400), das durch ein Computersystem durchgeführt wird, wobei das Verfahren Folgendes umfasst:
Speichern (402) von Informationen, die mehrere Netzrichtliniengruppen definieren, wobei jede Netzrichtliniengruppe einen Richtlinienort (208), eine Richtlinienrolle (210) und eine oder mehrere Netznutzungsrichtlinien beinhaltet, die Zugriffsberechtigungen für in einem Netz verfügbare Ressourcen spezifizieren, wobei der Richtlinienort einen speziellen Typ eines Zimmers in einem Büroraum definiert;
Empfangen (404), von einem ersten Netzverbindungspunkt in dem Netz, erster Client-Vorrichtung-Informationen, die angeben, dass eine Client-Vorrichtung mit dem ersten Netzverbindungspunkt verbunden ist, wobei der erste Netzverbindungspunkt eine Vorrichtung ist, mit der sich die Client-Vorrichtung verbindet, um auf das Netz zuzugreifen, wobei mehrere Netzverbindungspunkte einen Zugriff auf das Netz bereitstellen und jeder Netzverbindungspunkt mit einem Netzverbindungspunktort assoziiert ist, wobei der erste Netzverbindungspunkt einer der mehreren Netzverbindungspunkte ist, die mit einem ersten Netzverbindungspunktort assoziiert sind, wobei die empfangenen ersten Client-Vorrichtung-Informationen eine erste Benutzerrolle identifizieren, die mit der Client-Vorrichtung assoziiert ist;
basierend auf dem Identifizieren des ersten Netzverbindungspunktes, an dem die Client-Vorrichtung verbunden ist, Bestimmen eines speziellen Ortes, der mit der Client-Vorrichtung assoziiert ist, wobei der spezielle Ort einem Typ eines Zimmers in dem Büroraum entspricht, in dem die Client-Vorrichtung arbeitet;
Identifizieren (306), aus den mehreren Netzrichtliniengruppen und basierend auf 1) dem speziellen Ort, der basierend auf dem ersten Netzverbindungspunkt bestimmt wurde, und 2) der ersten Benutzerrolle, die mit der ersten Client-Vorrichtung assoziiert ist, einer ersten Netzrichtliniengruppe, die mit sowohl i) einem ersten Richtlinienort, der dem Typ des Zimmers entspricht, das dem speziellen Ort entspricht, der als mit der Client-Vorrichtung assoziiert bestimmt wurde, als auch ii) einer Richtlinienrolle, die der ersten Benutzerrolle der Client-Vorrichtung entspricht, assoziiert ist; und
Regulieren des Zugriffs der Client-Vorrichtung auf in dem Netz verfügbare Ressourcen basierend auf der einen oder den mehreren Netznutzungsrichtlinien, die mit der identifizierten ersten Netzrichtliniengruppe assoziiert sind.

2. Verfahren nach Anspruch 1, wobei der erste Netzverbindungspunkt ein Drahtlos-Router ist.

3. Verfahren nach Anspruch 1, wobei das Identifizieren der ersten Netzrichtliniengruppe Folgendes umfasst:
Identifizieren (406) einer Teilmenge von Netzrichtliniengruppen für die Client-Vorrichtung, wobei jede der Netzrichtliniengruppen in der Teilmenge von Netzrichtliniengruppen Prioritätsinformationen aufweist und eine der Netzrichtliniengruppen in den mehreren Netzrichtliniengruppen ist, wobei der Richtlinienort für jede der Netzrichtliniengruppen in der Teilmenge von Netzrichtliniengruppen mit dem ersten Netzverbindungspunktort übereinstimmt;
Vergleichen (408) der Prioritätsinformationen, die mit jeder der Netzrichtliniengruppen aus der Teilmenge von Netzrichtliniengruppen assoziiert sind; und
Auswählen (410) einer Netzrichtliniengruppe mit höchster Priorität aus der Teilmenge von Netzrichtliniengruppen als die erste Netzrichtliniengruppe, wobei die Netzrichtliniengruppe mit der höchsten Priorität eine höhere Priorität als die anderen Netzrichtliniengruppen in der Teilmenge von Netzrichtliniengruppen basierend auf den Prioritätsinformationen aufweist, die mit der Netzrichtliniengruppe mit der höchsten Priorität assoziiert sind.

4. Verfahren nach Anspruch 1, das ferner Folgendes umfasst:
Empfangen (308), von der Client-Vorrichtung, während die Client-Vorrichtung mit dem ersten Netzverbindungspunkt verbunden ist, der mit dem ersten Netzverbindungspunktort assoziiert ist, einer ersten Ressourcenanforderung zum Zugreifen auf eine in dem Netz verfügbare Ressource,
wobei das Regulieren des Zugriffs der Client-Vorrichtung auf die in dem Netz verfügbaren Ressource basierend auf der einen oder den mehreren Netznutzungsrichtlinien, die mit der identifizierten ersten Netzrichtliniengruppe assoziiert sind, Bestimmen (310), während die Client-Vorrichtung mit dem ersten Netzverbindungspunkt verbunden ist, der mit dem ersten Netzverbindungspunktort assoziiert ist, und basierend auf dem Empfangen der ersten Ressourcenanforderung, erster Zugriffsberichtungen für die Client-Vorrichtung auf die angeforderte Ressource basierend auf der einen oder den mehreren Netznutzungsrichtlinien umfasst, die mit der identifizierten ersten Netzrichtliniengruppe assoziiert sind.

5. Verfahren nach Anspruch 4, wobei die erste Ressourcenanforderung die ersten Client-Vorrichtung-Informationen umfasst.

6. Verfahren nach Anspruch 4, das ferner Folgendes umfasst:
Empfangen (312), von einem zweiten Netzverbindungspunkt in dem Netz, zweiter Client-Vorrichtung-Informationen, die angeben, dass die Client-Vorrichtung mit dem zweiten Netzverbindungspunkt verbunden ist, wobei der zweite Netzverbindungspunkt einer der mehreren Netzverbindungspunkte ist, die mit einem zweiten Netzverbindungspunktort assoziiert sind, wobei die empfangenen zweiten Client-Vorrichtung-Informationen eine zweite Benutzerrolle identifizieren, wobei der zweite Netzverbindungspunktort verschieden von dem ersten Netzverbindungsort ist,
Identifizieren (314), aus den mehreren Netzrichtliniengruppen, einer zweiten Netzrichtliniengruppe mit sowohl (1) einem assoziierten zweiten Richtlinienort, der dem zweiten Netzverbindungspunktort entspricht, als auch (ii) einer assoziierten Richtlinienrolle, die der zweiten Benutzerrolle der Client-Vorrichtung entspricht;
Empfangen (316), von der Client-Vorrichtung, während die Client-Vorrichtung mit dem zweiten Netzverbindungspunkt verbunden ist, der mit dem zweiten Netzverbindungspunktort assoziiert ist, einer zweiten Ressourcenanforderung zum Zugreifen auf die Ressource; und
Bestimmen (318), während die Client-Vorrichtung mit dem zweiten Netzverbindungspunkt verbunden ist, der mit dem zweiten Netzverbindungspunktort assoziiert ist, und basierend auf dem Empfangen der zweiten Ressourcenanforderung, zweiter Zugriffsberechtigungen für die Client-Vorrichtung auf die angeforderte Ressource basierend auf der einen oder den mehreren Netznutzungsrichtlinien, die mit der identifizierten zweiten Netzrichtliniengruppe assoziiert sind.

7. Verfahren nach Anspruch 6, wobei die zweite Netzrichtliniengruppe eine Standardnetzrichtliniengruppe ist, die auf alle Client-Vorrichtungen zutrifft, die mit dem Netz an dem zweiten Netzverbindungspunkt verbunden sind, der mit dem zweiten Netzverbindungspunktort assoziiert ist.

8. Verfahren nach Anspruch 6, wobei die zweite Netzrichtliniengruppe restriktiver als die erste Netzrichtliniengruppe für wenigstens manche der in dem Netz verfügbaren Ressourcen ist.

9. Verfahren nach Anspruch 1 oder 6, wobei die empfangenen Client-Vorrichtung-Informationen domänenspezifische Informationen für den Netzverbindungspunkt aufweisen, mit dem die Client-Vorrichtung verbunden ist.

10. Verfahren nach Anspruch 1, wobei jede der Netzrichtliniengruppen in den mehreren Netzrichtliniengruppen mit einer mehrerer Benutzerrollen basierend auf einem Netzrichtliniengruppennamen verknüpft ist, der mit der verknüpften Netzrichtliniengruppe assoziiert ist, die mit einem Benutzerrollen übereinstimmt, der mit der verknüpften Benutzerrolle assoziiert ist, wobei die mit der Client-Vorrichtung assoziierte erste Benutzerrolle eine der mehreren Benutzerrollen ist.

11. Verfahren nach Anspruch 1, wobei der erste Richtlinienort und der erste Netzverbindungspunktort beide den gleichen Netzverbindungspunktortsnamen umfassen.

12. Verfahren nach Anspruch 1, wobei das Identifizieren der ersten Netzrichtliniengruppe und das Regulieren des Zugriffs der Client-Vorrichtung auf in dem Netz verfügbare Ressource darauf basieren, ob die Netzverbindungspunkte drahtlose Verbindungen oder drahtgebundene Verbindungen sind.

13. Computerspeicherungsmedium, das mit Anweisungen codiert ist, die bei Ausführung durch einen oder mehrere Computer den einen oder die mehreren Computer zum Durchführen von Operationen veranlassen, die das Verfahren nach einem von Anspruch 1 bis 12 umfassen.

14. Computersystem, das einen oder mehrere Computer beinhaltet, die zum Durchführen der Operationen aus einem der Verfahren nach Ansprüchen 1 bis 12 ausgelegt ist, wobei die Computer zum Durchführen der Operationen dadurch ausgelegt sind, dass sie Software, Firmware, Hardware oder einer Kombination daraus aufweisen, die auf dem Computersystem installiert ist.

## Revendications

1. Procédé (400) mis en œuvre par un système d'ordinateurs, le procédé comprenant :
le stockage (402) d'informations définissant une pluralité de groupes de politiques de réseau, chaque groupe de politiques de réseau comportant une localisation de politiques (208), un rôle de politiques (210) et une ou plusieurs politiques d'utilisation de réseau qui stipulent des permissions d'accès pour des ressources disponibles sur un réseau, la localisation de politiques définissant un type spécifique d'une pièce dans un espace de bureaux ;
la réception (404), depuis un premier point de connexion réseau sur le réseau, de premières informations de dispositif client indiquant qu'un dispositif client est connecté au premier point de connexion réseau, le premier point de connexion réseau étant un dispositif auquel le dispositif client se connecte pour accéder au réseau, une pluralité de points de connexion réseau fournissant un accès au réseau et chaque point de connexion réseau étant associé à une localisation de point de connexion réseau, le premier point de connexion réseau étant l'un de la pluralité de points de connexion réseau qui est associé à une première localisation de point de connexion réseau, les premières informations de dispositif client reçues identifiant un premier rôle d'utilisateur associé au dispositif client ;
sur la base de l'identification du premier point de connexion réseau sur lequel le dispositif client est connecté, la détermination d'une localisation spécifique associée au dispositif client, la localisation spécifique correspondant à un type d'une pièce dans l'espace de bureaux où le dispositif client fonctionne ;
l'identification (306), parmi la pluralité de groupes de politiques de réseau et sur la base de 1) la localisation spécifique déterminée sur du premier point de connexion réseau et 2) du premier rôle d'utilisateur associé au dispositif client, d'un premier groupe de politiques de réseau associé à la fois à i) une première localisation de politiques qui correspond au type de la pièce correspondant à la localisation spécifique déterminée comme étant associée au dispositif client et ii) un rôle de politiques qui correspond au premier rôle d'utilisateur du dispositif client ; et
la régulation de l'accès du dispositif client à des ressources disponibles sur le réseau sur la base des une ou plusieurs politiques d'utilisation de réseau associées au premier groupe de politiques de réseau identifié.

2. Procédé selon la revendication 1, dans lequel le premier point de connexion réseau est un routeur sans fil.

3. Procédé selon la revendication 1, dans lequel l'identification du premier groupe de politiques de réseau comprend :
l'identification (406) d'un sous-ensemble de groupes de politiques de réseau pour le dispositif client, chacun des groupes de politiques de réseau dans le sous-ensemble de groupes de politiques de réseau possédant des informations de priorité et étant l'un des groupes de politiques de réseau dans la pluralité de groupes de politiques de réseau, la localisation de politiques pour chacun des groupes de politiques de réseau dans le sous-ensemble de groupes de politiques de réseau coïncidant avec la première localisation de point de connexion réseau ;
la comparaison (408) des informations de priorité associées à chacun des groupes de politiques de réseau issu du sous-ensemble de groupes de politiques de réseau ; et
la sélection (410), comme premier groupe de politiques de réseau, d'un groupe de politiques de réseau ayant la plus haute priorité dans le sous-ensemble de groupes de politiques de réseau, le groupe de politiques de réseau ayant la plus haute priorité possédant une priorité plus haute que celle des autres groupes de politiques de réseau dans le sous-ensemble de groupes de politiques de réseau sur la base des informations de priorité associées au groupe de politiques de réseau ayant la plus haute priorité.

4. Procédé selon la revendication 1, comprenant en outre :
la réception (308), depuis le dispositif client tandis que le dispositif client est connecté au premier point de connexion réseau associé à la première localisation de point de connexion réseau, d'une première demande de ressource pour accéder à une ressource disponible sur le réseau ;
la régulation de l'accès du dispositif client à des ressources disponibles sur le réseau sur la base des une ou plusieurs politiques d'utilisation de réseau associées au premier groupe de politiques de réseau identifié comprenant la détermination (310), tandis que le dispositif client est connecté au premier point de connexion réseau associé à la première localisation de point de connexion réseau et sur la base de la réception de la première demande de ressource, de premières permissions d'accès pour le dispositif client à la ressource demandée sur la base des une ou plusieurs politiques d'utilisation de réseau associées au premier groupe de politiques de réseau identifié.

5. Procédé selon la revendication 4, dans lequel la première demande de ressource comprend les premières informations de dispositif client.

6. Procédé selon la revendication 4, comprenant en outre :
la réception (312), depuis un deuxième point de connexion réseau sur le réseau, de deuxièmes informations de dispositif client indiquant que le dispositif client est connecté au deuxième point de connexion réseau, le deuxième point de connexion réseau étant l'un de la pluralité de points de connexion réseau qui est associé à une deuxième localisation de point de connexion réseau, les deuxièmes informations de dispositif client reçues identifiant un deuxième rôle d'utilisateur, la deuxième localisation de point de connexion réseau étant différente de la première localisation de point de connexion réseau ;
l'identification (314), parmi la pluralité de groupes de politiques de réseau, d'un deuxième groupe de politiques de réseau possédant à la fois (i) une deuxième localisation de politiques associée qui correspond à la deuxième localisation de point de connexion réseau, et (ii) un rôle de politiques associé qui correspond au deuxième rôle d'utilisateur du dispositif client ;
la réception (316), depuis le dispositif client tandis que le dispositif client est connecté au deuxième point de connexion réseau associé à la deuxième localisation de point de connexion réseau, d'une deuxième demande de ressource pour accéder à la ressource ; et
la détermination (318), tandis que le dispositif client est connecté au deuxième point de connexion réseau associé à la deuxième localisation de point de connexion réseau et sur la base de la réception de la deuxième demande de ressource, de deuxièmes permissions d'accès pour le dispositif client à la ressource demandée sur la base des une ou plusieurs politiques d'utilisation de réseau associées au deuxième groupe de politiques de réseau identifié.

7. Procédé selon la revendication 6, dans lequel le deuxième groupe de politiques de réseau est un groupe de politiques de réseau par défaut qui s'applique à tous les dispositifs clients qui se connectent au réseau au niveau du deuxième point de connexion réseau associé à la deuxième localisation de point de connexion réseau.

8. Procédé selon la revendication 6, dans lequel le deuxième groupe de politiques de réseau est plus restrictif que le premier groupe de politiques de réseau pour au moins certaines des ressources disponibles sur le réseau.

9. Procédé selon la revendication 1 ou 6, dans lequel les informations de dispositif client reçues comprennent des informations propres à un domaine pour le point de connexion réseau auquel le dispositif client est connecté.

10. Procédé selon la revendication 1, dans lequel chacun des groupes de politiques de réseau dans la pluralité de groupes de politiques de réseau est lié à l'un d'une pluralité de rôles d'utilisateur sur la base de la coïncidence d'un nom de groupe de politiques de réseau associé au groupe de politiques de réseau lié avec un nom de rôle d'utilisateur associé au rôle d'utilisateur lié, le premier rôle d'utilisateur associé au dispositif client étant l'un de la pluralité de rôles d'utilisateur.

11. Procédé selon la revendication 1, dans lequel la première localisation de politiques et la première localisation de point de connexion réseau comprennent toutes deux le même nom de localisation de point de connexion réseau.

12. Procédé selon la revendication 1, dans lequel l'identification du premier groupe de politiques de réseau et la régulation de l'accès du dispositif client à des ressources disponibles sur le réseau dépendent du fait que les points de connexion réseau soient des connexions sans fil ou des connexions filaires.

13. Support de stockage d'ordinateur codé avec des instructions qui, lorsqu'elles sont exécutées par un ou plusieurs ordinateurs, amènent les un ou plusieurs ordinateurs à réaliser des opérations comprenant le procédé selon l'une quelconque des revendications 1 à 12.

14. Système d'ordinateurs comportant un ou plusieurs ordinateurs configurés pour réaliser les opérations de l'un quelconque des procédés selon les revendications 1 à 12, les ordinateurs étant configurés pour réaliser les opérations grâce à des logiciels, des micrologiciels, du matériel ou une combinaison de ceux-ci, installés sur le système d'ordinateurs.
